# EUROPÄISCHE PATENTANMELDUNG

(11) **EP 2 522 849 A2**
(43) Veröffentlichungstag der Anmeldung: **14.11.2012**
(21) Anmeldenummer: 12003737.9
(22) Anmeldetag: 10.05.2012
(51) Int. Cl.: F03B 13/18

(54) **System zum Fördern von Wasser**

(30) Priorität: 12.05.2011 AT 6782011
(71) Anmelder: Ludwiger, Hannes, 9821 Obervellach (AT)
(72) Erfinder: Ludwiger, Hannes, 9821 Obervellach (AT)

(57) **Zusammenfassung**

Ein System zum Fördern von Wasser weist eine Pumpe (3) zur Förderung des Wassers und einen Pumpenantrieb (7) zum Antrieb der Pumpe (3) auf. Der erfindungsgemässe Pumpenantrieb ist eine wasserbetätigte Wippe (7), wobei die Wippe (7) mit einer Antriebsachse (31) der Pumpe (3) wirkverbunden ist, so dass eine Schwenkbewegung der Wippe (7) eine Antriebsbewegung der Antriebsachse (31) zur Folge hat. Das System und der Pumpenantrieb ermöglichen ein möglichst wartungsfreies Fördern von Wasser mit einfachsten Mitteln. Der Pumpenantrieb lässt sich auch für andere Arten von Pumpen einsetzen.

## Beschreibung

### TECHNISCHES GEBIET

Die vorliegende Erfindung betrifft ein System zum Fördern von Wasser gemäss Oberbegriff des Patentanspruchs 1 sowie einen Antrieb für ein derartiges System gemäss Oberbegriff des Anspruchs 12.

### STAND DER TECHNIK

Zum Fördern von Wasser aus einem Flussbeet, einem stehenden Gewässer sowie aus Becken werden die unterschiedlichsten Pumpen eingesetzt. Obwohl in unterentwickelten Ländern oft noch Tiere zur Betätigung eines mechanischen Pumpwerks eingesetzt werden, ist es heute üblich, einen Elektro- oder Verbrennungsmotor als Antrieb für die Pumpe zu verwenden. In abgelegenen Orten von hochindustrialisierten Ländern ist es jedoch ebenfalls nicht immer möglich oder gewünscht, derartige Motoren einzusetzen. So kann es wünschenswert sein, dass für eine in einem Naturschutzgebiet befindliche Alphütte eine Wasserversorgung mit alternativen, insbesondere mit möglichst wartungsarmen und umweltfreundlichen Mitteln zur Verfügung gestellt wird. Auch in Entwicklungsländern ist es vorteilhaft, derartige Pumpenantriebe zu verwenden, insbesondere wenn sie zudem einfach zu installieren und zu warten sind und die allfälligen Ersatzteile einfach zu beschaffen bzw. einfach selber hergestellt werden können.

ES 2234391 und US 1 260 204 offenbaren Systeme mit wasserbetriebenen Wippen zur Stromerzeugung bzw. zum Antrieb eines Motors.

### DARSTELLUNG DER ERFINDUNG

Es ist deshalb eine Aufgabe der Erfindung, ein möglichst wartungsarmes und einfach zu bedienendes System zum Fördern von Wasser zu schaffen.

Diese Aufgabe löst ein System zum Fördern von Wasser mit den Merkmalen des Patentanspruchs 1.

Es ist eine weitere Aufgabe der Erfindung, einen Antrieb zu schaffen, welcher möglichst wartungsarm, kostengünstig und einfach zu warten ist.

Diese Aufgabe löst ein Antrieb mit den Merkmalen des Anspruchs 12.

Das erfindungsgemässe System zum Fördern von Wasser weist eine Pumpe zur Förderung des Wassers und einen Pumpenantrieb zum Antrieb der Pumpe auf. Der erfindungsgemässe Pumpenantrieb ist erfindungsgemäss eine wasserbetätigte Wippe. Diese Wippe ist mit einer Antriebsachse der Pumpe wirkverbunden, so dass eine Schwenkbewegung der Wippe eine Antriebsbewegung der Antriebsachse zur Folge hat.

Es lässt sich somit eine mechanisch betätigbare Pumpe einsetzen. Es ist kein wartungsintensiver Verbrennungsmotor und auch keine relativ teure und/oder aufwendige Stromquelle für den Antrieb notwendig. Vorteilhaft ist ferner, dass mit diesem System Wasser mit sehr geringem Vordruck auf grosse Höhen gefördert werden kann. Der Antrieb ist sehr einfach aufgebaut, wartungsarm und unempfindlich gegen Verschmutzung. Ferner ist das System geeignet, Trinkwasser zu fördern.

In einer bevorzugten Ausführungsform lässt sich für den Antrieb Wasser von demselben Ursprung verwenden, von welchem auch das Wasser mittels der Pumpe gefördert werden soll. Dieser Ursprung ist vorzugsweise ein Bach oder ein Fluss. Ist der Ursprung ein See, ein Teich, ein Wasserbecken oder ein anderes stilles Gewässer, so wird üblicherweise ein Abfluss aus diesem Gewässer verwendet, um Wasser zur Betätigung der Wippe zu entnehmen.

Das Wasser, welches mittels der Pumpe gefördert werden soll, kann jedoch auch einen anderen Ursprung als dasjenige für die Wippe haben. Insbesondere kann die Pumpe sauberes Wasser fördern und die Wippe kann mit Schmutzwasser betrieben werden.

Die Verbindung zwischen Wippe und Antriebsachse kann direkt erfolgen, indem die Antriebsachse mit Hilfe von geeigneten Mitteln an der Wippe befestigt ist. Sie kann fest mit der Wippe verbunden sein. Die Verbindung kann auch indirekt über Getriebe, Pleuelstangen oder andere geeignete Mittel, insbesondere über lösbare Kupplungen, erfolgen.

Die Pumpe zum Fördern des Wassers ist vorzugsweise eine Kolbenpumpe, wobei auch andere Arten von mechanisch antreibbaren Pumpen eingesetzt werden können. Kolbenpumpen haben den Vorteil, dass sie relativ wartungsarm und zudem einfach zu warten sind.

In einer bevorzugten Ausführungsform ist eine Mehrkolbenpumpe, insbesondere eine Zweikolbenpumpe, verwendet. Diese Pumpe weist eine relativ grosse Förderleistung auf. In diesem Fall ist die Antriebsachse der Pumpe vorzugsweise mit der Schwenkachse der Wippe verbunden, wobei vorzugsweise Schwenkbewegungen der Wippe in beiden Richtungen in eine Kolbenbewegung der Pumpe und somit in einen Förderhub umgesetzt werden. Ist die Antriebsachse der Kolbenpumpe für eine gleichgerichtete Antriebsbewegung ausgebildet, so lässt sich im Kopplungsteil zwischen Antriebsachse und Schwenkachse ein geeignetes Übersetzungsmittel bekannter Art einsetzen.

In einer anderen Ausführungsform ist die Pumpe durch eine oder mehrere Einkolbenpumpen gebildet. Diese Ausfiihrungsform hat den Vorteil, dass die Einzelpumpen kostengünstig sind und äusserst einfach zu warten sind. Wird mehr als eine Einkolbenpumpe eingesetzt, so funktioniert das System auch noch bei Ausfall einer dieser Pumpen. Werden Einkolbenpumpen eingesetzt, so sind ihre Kolbenstangen vorzugsweise mit einem Arm der Wippe an einer Stelle beabstandet zur Schwenkachse der Wippe verbunden.

Vorzugsweise erfolgt der Antrieb der Wippe wie folgt: die Wippe weist einen auf einer Basis schwenkbar gelagerten Balken mit einem ersten freien Ende auf, wobei an diesem ersten freien Ende ein Wasserauffangbehälter angeordnet ist. Ferner ist eine Wasserleitung zum automatischen Befüllen des Behälters vorhanden, wenn der Behälter sich in einer oberen Position des ersten freien Endes befindet. Ferner ist ein Mittel zum Entleeren des Behälters vorhanden, wenn dieser sich in einer unteren Position des ersten freien Endes befindet.

Die Wippe funktioniert bereits mit einem einzigen Wasserbehälter an einem Ende des Balkens. Dabei ist am anderen Ende vorzugsweise ein Gegengewicht vorhanden, um den Behälter nach Entleerung wieder in seine angehobene Position zurückzubringen.

Vorzugsweise weist der Balken jedoch zwei freie Enden auf, wobei an beiden freien Enden je ein Wasserauffangbehälter angeordnet ist. Diese zwei Wasserauffangbehälter sind abwechslungsweise automatisch mit Wasser befüllbar und abwechslungsweise automatisch wieder entleerbar, so dass sie gegenseitig die Gegengewichte bilden, um die entleerten Behälter wieder in die gehobene Position zurückzubringen.

Zur Entleerung weist der Wasserauffangbehälter vorzugsweise an seiner Unterseite eine Öffnung auf, welche federbelastet nach der Entleerung wieder verschliessbar ist. Auf diese Weise lässt sich der Behälter bis auf einen Befülleingang und einen Entleerungsausgang vollständig geschlossen ausbilden. Es ist auch möglich, einen gefüllten, vorzugsweise oben offen ausgebildeten Behälter in eine Schwenkbewegung zu zwingen, um ihn zu entleeren.

In einer bevorzugten Ausführungsform erfolgt die Befüllung der Behälter entlang des Balkens. Die Wasserleitung kann dabei auf dem Balken befestigt sein. Vorzugsweise ist jedoch der Balken selber hohl und bildet somit selber die Wasserleitung.

Damit Wasser von der Wasserleitung zugeführt werden kann, ist ein Anschluss zum Anschluss an eine Wasser zuführende Antriebsleitung vorhanden. Vorzugsweise befindet sich dieser Anschluss in einer durch die Schwenkachse verlaufenden Ebene. Auf diese Weise lässt sich ein einziges Ventil verwenden, um einerseits die Zuführung von Wasser in den einen Behälter zu sperren und in den anderen Behälter zuzulassen.

Vorzugsweise ist in der Wasserleitung, insbesondere im Balken, ein Ventil vorhanden, welches eine fluidkommunizierende Verbindung zwischen einen ersten der Wasserauffangbehälter und der Antriebsleitung zulässt und eine fluidkommunizierende Verbindung zwischen dem zweiten der Wasserauffangbehälter und der Antriebsleitung unterbricht und alternierend die fluidkommunizierende Verbindung zwischen dem ersten Wasserauffangbehälter und der Antriebsleitung zulässt und die fluidkommunizierende Verbindung zwischen dem zweiten Wasserauffangbehälter und der Antriebsleitung unterbricht.

In einer bevorzugten Ausführungsform ist dieses Ventil durch eine Kugel gebildet, wobei sich die Wasserleitung im Balken von der Schwenkachse zu den Wasserauffangbehältern hin an je einer Stelle verjüngt, so dass die Kugel beim Wippen des Balkens zwischen diesen zwei verjüngten Stellen hin und her rollt und abwechslungsweise diese verjüngten Stellen dichtend verschliesst. Diese Ausführungsform hat den Vorteil, dass das Ventil praktisch wartungsfrei ist. Bei Fehlfunktionen lässt sich die Kugel einfach entfernen oder reinigen. Auch Ersatzkugeln sind einfach zu finden oder herzustellen. Ein Sichtfenster in der Wasserleitung, insbesondere im Balken, welches im Bereich des Ventils angeordnet ist, ermöglicht eine regelmässige Überprüfung der Abnützung der Kugel und der Verschmutzung dieses Bereichs der Wasserleitung.

Anstelle der Kugel kann auch en anderes Verschlusselement, z.B. eine oder mehrere Klappen verwendet werden.

Der erfindungsgemässe Antrieb eignet sich nicht nur für den Antrieb von Pumpen, welche selber zur Förderung von Wasser eingesetzt werden. Er eignet sich auch als Antrieb für anders benutzte Pumpen und/oder mechanische Antriebe, beispielsweise für Lichtmaschinen oder andere vor allem in Drittweltländern oder abgelegenen Regionen eingesetzte Pumpen.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figur 1: eine schematische Prinzipdarstellung des erfindungsgemässen Systems;
- Figur 2: eine schematische Seitenansicht der Wippe gemäss Figur 1;
- Figur 3: einen Längsschnitt durch einen Wasserauffangbehälter gemäss Figur 1 in einer schematischen Darstellung;
- Figur 4: eine schematische Ansicht eines Teils des Systems gemäss Figur 1 von oben, in leicht anderer Ausführungsform;
- Figur 5: eine schematische Prinzipdarstellung des erfindungsgemässen Systems in einer zweiten Ausführungsform und
- Figur 6: eine schematische Prinzipdarstellung des erfindungsgemässen Systems in einer dritten Ausführungsform.

### BESCHREIBUNG BEVORZUGTER AUSFÜHRUNGSFORMEN

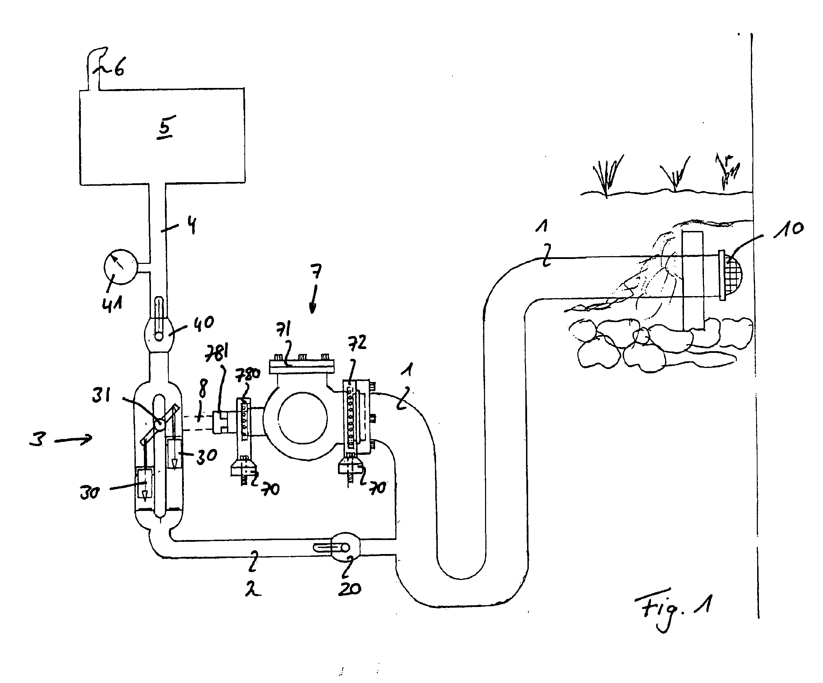

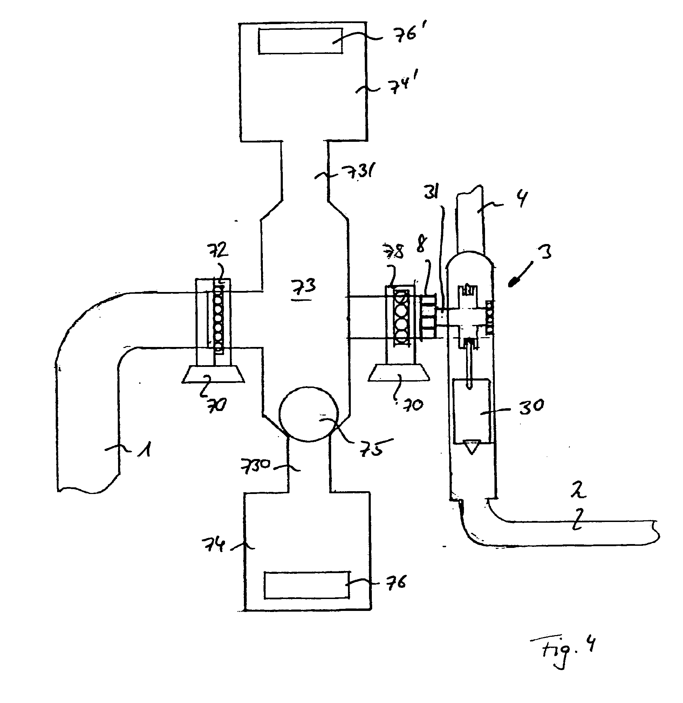

In den Figuren 1 bis 4 ist ein erstes Ausführungsbeispiel des erfindungsgemässen Systems dargestellt. Aus einem fliessenden Gewässer, insbesondere einem Fluss oder einem kleinen Gebirgsbach, wird Wasser entnommen, wie dies in Figur 1 erkennbar ist. Hierzu ist eine Öffnung einer Leitung, hier Antriebsleitung 1 genannt, in den Fluss gelegt. Vorzugsweise ist die Öffnung mit einem Partikelsieb 10 verschlossen, damit keine grösseren Feststoffe in die Leitung 1 gelangen können.

Die Antriebsleitung 1 führt zu einer Wippe 7. Sie ist dichtend an die Wippe 7 gekoppelt. Dies kann beispielsweise mittels eines Verbindungsflanschs 72 erfolgen. Vorzugsweise wird hierfür eine Radial-Wellendichtung, auch Simmerring genannt, verwendet.

Das System umfasst ferner eine Pumpe 3, welche Wasser von einer Zuleitung 2 in eine Pumpleitung 4 fördern soll. Das Wasser der Pumpleitung 4 kann direkt benutzt werden oder sie kann zu einem Reservoir 5, einem sogenannten Hochbehälter oder Pumpbecken, führen. Das Pumpbecken 5 liegt üblicherweise höher als der Fassungsort der Antriebsleitung 1 im fliessenden Gewässer. Von diesem Reservoir 5 führt eine Nutzleitung 6 Wasser unter Druck zum Benützer.

Die Zuleitung 2 kann eine Abzweigung der Pumpleitung 1 sein. Sie kann jedoch auch Wasser von einem anderen Fassungsort desselben fliessenden Gewässers führen. Alternativ oder zusätzlich kann sie auch Wasser aus anderen Gewässern, insbesondere einem stehenden Gewässer, einem Tiefbrunnen oder einem Becken, weiter leiten.

Die Zuleitung 2 ist vorzugsweise mit einem Schliesser 20 versehen, um die Zufuhr von Wasser in die Pumpe 3 zu unterbrechen. Dies ist insbesondere bei Wartungsarbeiten hilfreich. Der Schliesser 20 kann beispielsweise ein einfacher Schieber oder ein Kugelhahn sein. Auch die Pumpleitung 4 ist vorzugsweise mit einem Schliesser 40 verschliessbar. Die Art des Schliessers und der Grund seiner Anordnung ist derselbe wie beim ersten Schliesser 20. Auch die Antriebsleitung 1 kann mit einem Schliesser versehen sein.

In der Pump- oder Druckleitung 4 ist vorzugsweise ein Manometer 41 angeordnet, welches den Druck in der Pumpleitung 4 misst.

Die hier dargestellte Pumpe 3 ist eine Kolbenpumpe, insbesondere eine Pumpe mit zwei wechselseitig fördernden Kolben 30. Das heisst, dass sie alternativ angehoben und gesenkt werden, so dass ununterbrochen Wasser durch die Pumpe gefördert wird. Es lassen sich auch andere Arten von Pumpen einsetzen, wobei das Wasser nicht zwingend durch die Pumpe durchlaufen muss.

Die Antriebsachse 31 der Pumpe 3 ist mit der Wippe 7 mechanisch wirkverbunden. Eine Wippbewegung der Wippe 7 führt dazu, dass die Antriebsachse 31 bewegt wird und so die Pumpe 3 betätigt wird. Die Antriebsachse 31 kann direkt oder über eine Übertragungseinheit 8 mit der Schwenkachse 781 der Wippe 7 mechanisch verbunden sein.

Die Übertragungseinheit 8 kann, wie dies in Figur 8 dargestellt ist, ein einfacher Flansch sein, welcher die zwei Achsen 781, 31 miteinander verbindet. Sie kann aber beispielsweise auch ein Getriebe oder einen Bewegungsumsetzer beinhalten.

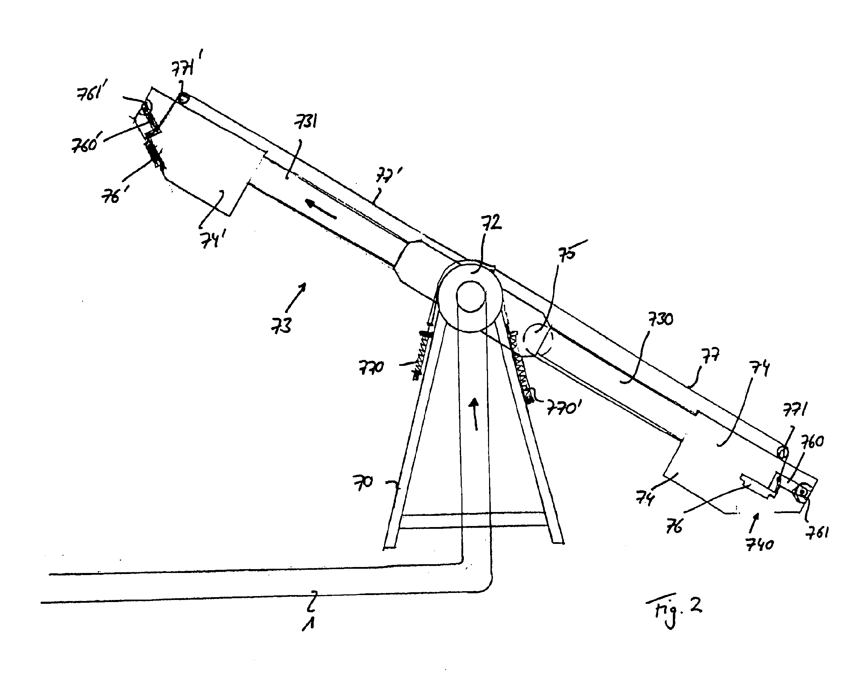

Die Wippe 7 ist in Figur 2 detailliert dargestellt. Sie weist einen Balken 73 auf, welcher auf einem Lagerbock 70 schwenkbar angeordnet ist. Der Lagerbock 70 ist vorzugsweise fest im Boden verankert. Eine Schwenkachse 781 des Balkens 73 ist in einem Lager 780 des Lagerbocks 70 schwenkbar gehalten. Der Balken 73 wird auf beiden Seiten der Schwenkachse in je einen Arm 730, 731 unterteilt. Die Arme 730, 731 sind vorzugsweise gleich lang bzw. die Schwenkachse befindet sich vorzugsweise im Schwerpunkt des Balkens 73.

Beide Arme 730, 731 weisen je ein freies Ende auf, an welchem je ein Wasserauffangbehälter 74, 74' angeordnet ist. Der Balken 73 ist hohl ausgebildet und verbindet diese Wasserbehälter 74, 74' mit der Antriebsleitung 1. Der Balken 73 stellt somit eine wippeninterne Wasserleitung dar. Die Verbindung von Balken 73 mit der Antriebsleitung 1 erfolgt vorzugsweise in der Ebene der Schwenkachse.

Die Wasserleitung des Balkens 73 weist im Bereich der Schwenkachse der Wippe einen grösseren Innendurchmesser auf als im Bereich der Behälter 74, 74'. Die Verjüngung kann kontinuierlich erfolgen. Vorzugsweise ist in beiden Armen 730, 731 je eine klar definierte Stufe vorhanden, welche als Ventilsitz für eine Ventilkugel 75 dient. Diese Ventilkugel 75 rollt bei der Wippbewegung des Balkens 73 zwischen diesen zwei Ventilsitzen hin und her. Dadurch schliesst sie je nach Stellung des Balkens 73 den einen oder anderen Arm 730, 731 und lässt den alternativen Arm 730, 731 offen. Wasser fliesst somit von der Antriebsleitung 1 durch den Balken 73 in den jeweils höher gelegenen Wasserauffangbehälter 74'. In Figur 2 ist dies mit einem Pfeil dargestellt.

Es ist deshalb vorteilhaft, die Grösse und/oder der Standort der Wippe 7 geeignet zu wählen. Eine geeignete Wahl berücksichtigt die Strömung des fliessenden Gewässers im Kombination mit der relativen Höhenlage des oberen Behälters 74' zum Fassungsort der Antriebsleitung 1 im Gewässer, damit das Wasser tatsächlich durch das oben genannte Leitungssystem in den angehobenen Behälter 74' fliesst.

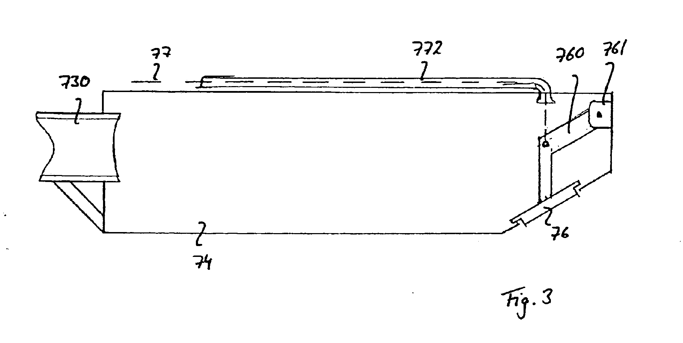

Wie in den Figuren 2 und 3 erkennbar ist, weist der Behälter 74, 74' eine Ausflussöffnung 740 auf. Diese Öffnung 740 ist beim angehobenen Behälter 74' geschlossen und beim abgesenkten Behälter 74 geöffnet. Die Öffnung 740 befindet sich vorzugsweise an einer unteren Stelle des Behälters 74, 74'. Das aus dem Behälter 74, 74' ausfliessende Wasser kann in das fliessende Gewässer zurückgeführt werden. Es kann auch anderweitig genutzt werden.

Die Öffnung 740 lässt sich auf unterschiedliche Weise verschliessen und selbsttätig öffnen. Im hier dargestellten Beispiel ist eine Verschlussklappe 76, 76' vorhanden, welche im Innern des Behälters 74, 74' angeordnet ist. Diese Verschlussklappe 76, 76' ist über einen Kniehebel 760, 760' in einem Schwenklager 761, 761' schwenkbar gelagert. Je eine Betätigungsschnur 77 führt vom jeweiligen Kniehebel 760, 760' über eine Umlenkrolle 771, 771' zum Lagerbock 70 und endet in einer Rückstellfeder 770, 770'. Vorzugsweise ist die Rückstellfeder 770, 770' an der der Schwenkachse 781 gegenüberliegenden Seite des Lagerbocks 70 angeordnet. Das heisst, die Rückstellfeder 770 ist mit der Schnur 77 und somit mit der Verschlussklappe 76 verbunden. Dank dieser Anordnung öffnet sich die Klappe 76 beim Absenken des Behälters 74. Sie gibt die Öffnung 740 frei. Das Wasser kann aus dem Behälter 74 ausfliessen. Gleichzeitig schliesst die Klappe 76' des anderen Behälters 74', während er angehoben wird. Der angehobene Behälter 74' kann somit gefüllt werden.

Damit die Schnur 77 sich nicht zu schnell abnützt, ist sie vorzugsweise mindestens teilweise in einem Schutzrohr 772 geführt, wie dies in Figur 3 dargestellt ist. Um den Zustand der Ventilkugel 75 und den Verschmutzungsgrad der Wasserleitung im Innern des Balkens 7 zu überprüfen, ist vorzugsweise ein Flanschdeckel 71 mit Sichtfenster vorhanden (siehe Figur 1). Falls eine Wartung notwendig ist, muss lediglich der Flanschdeckel 71 entfernt werden.

Der Antrieb der Pumpe 3 erfolgt nun mittels dieser Wippe 7. Wasser gelangt über die Antriebsleitung 1 auf natürliche Weise in den angehobenen Behälter 74' der Wippe 7. Ist dieser genügend gefüllt, sinkt er nach unten, der Balken schwenkt den anderen noch leeren Behälter 74 nach oben. Dadurch rollt die Ventilkugel 75 vom Ventilsitz weg und gibt den Zugang zum noch leeren Behälter frei. Spätestens wenn der gefüllte Behälter 74' unten angelangt ist, entleert er sich und die Ventilkugel 75 verschliesst seinen Zugang zur Antriebsleitung 1. Der andere, nun obere Behälter wird gefüllt und bei genügendem Füllstand senkt auch er sich nach unten, so dass sich die Abläufe wiederholen, solange die Antriebsleitung 1 Wasser liefert.

Die Schwenkachse 781 der Wippe 7 schwenkt dadurch hin und her und gibt diese Drehbewegung direkt oder übersetzt an die Antriebsachse 31 weiter, welche die Pumpe 3 antreibt. Wasser wird somit von der Zuleitung 2 in die Pumpleitung 4 gepumpt. Um einen genügend grossen Wirkungsgrad zu erreichen, kann es je nach Ursprung des Wassers vorteilhaft sein, dass die Antriebsleitung 1 einen wesentlich grösseren Durchmesser aufweist als die Zuleitung 2.

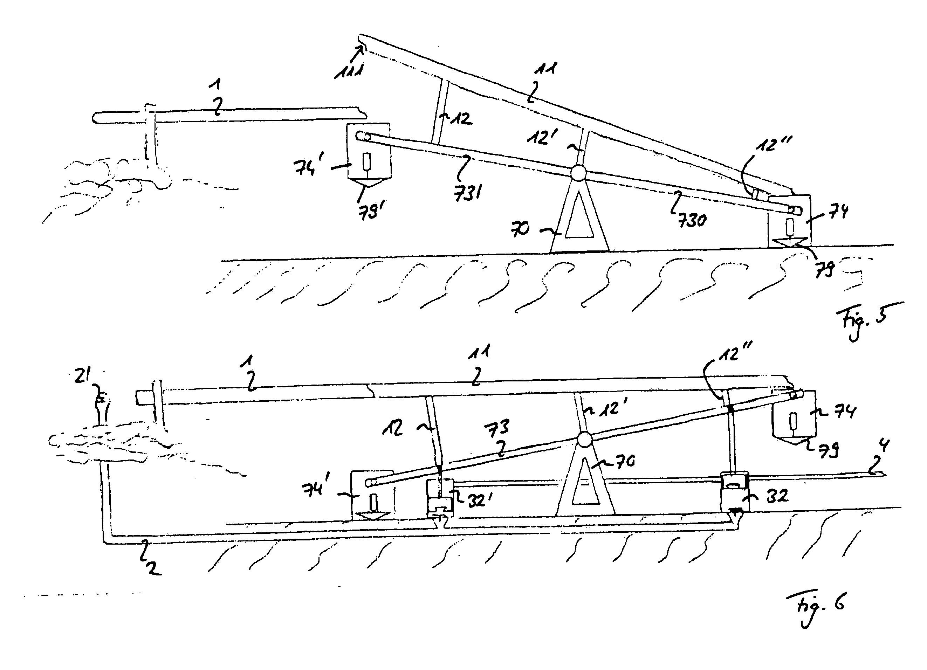

In Figur 5 ist eine alternative Art der Zuführung von Wasser in die Wippe 7 dargestellt. Hier ist die Antriebsleitung mindestens teilweise durch ein Rohr 1 gebildet. Dieses endet über einen angehobenen Behälter 74' der Wippe 7. Auf dem Balken 73 der Wippe 7 ist ein Verbindungsrohr 11 befestigt. Dieses verläuft so in einem Winkel zum Balken 73, dass das Verbindungsrohr 11, wenn der andere Behälter 74 angehoben ist, sich mit dem ersten Rohr 1 verbindet und ein leichtes Gefälle vom ersten Rohr 1 zum angehobenen zweiten Behälter 74 aufweist. Hierfür ist das Verbindungsrohr 11 durch entsprechend unterschiedlich lange Stützen 12, 12', 12" am Balken 73 befestigt.

Das Verbindungsrohr 11 endet mit seiner Mündung 110 über diesem zweiten Behälter 74, so dass es den Behälter 74 befüllen kann. An seinem anderen Ende ist entweder ein Kopplungsteil zur selbsttätigen Kopplung mit dem Rohr 1 angebracht oder das Ende ist entsprechend geformt. In diesem Fall weisen sowohl dieses Kopplungsende 111 des Verbindungsrohrs 11 wie auch das zugehörige Ende des Rohrs 1 eine Passform auf, welche gemeinsam eine möglichst dicht geschlossene Rohrleitung bildet.

Bei Zusammenschau der Figuren 5 und 6 ist nun die Funktionsweise dieser Anordnung erkennbar. Je nachdem, welche Wipplage der Balken 73 aufweist, ist entweder eine kurze oder lange Antriebsleitung 1 mit oder ohne Verbindungsrohr 11 gebildet, so dass entweder der eine oder andere Behälter 74, 74' gefüllt werden kann. Die Antriebsleitung 1 bildet zusammen mit dem Verbindungsrohr 11 die Wasserleitung zur Befüllung der Behälter 74, 74'. Dadurch erübrigt sich ein Ventil, welches die Wasserleitung zu den Behältern 74, 74' öffnet und unterbricht. Es ist ein Verschleissteil weniger vorhanden und die Wartung zudem erleichtert. Auch muss der Balken 73 nicht hohl ausgebildet werden.

Diese Befüllart der Behälter lässt sich mit der oben genannten Anordnung der Pumpe 3 kombinieren. In Figur 6 ist eine andere Pumpe dargestellt. Diese weist zwei oder mehr Einkolbenpumpen 32, 32' auf, welche beabstandet zur Schwenkachse 781 der Wippe 7 mit den Armen 730, 731 der Wippe 7 mechanisch wirkverbunden sind. Hier sind einfach die Kolbenstangen der Pumpen 32, 32' mit den Armen 730, 731 fest verbunden. Dadurch werden die Kolben der Einkolbenpumpen 32, 32' bewegt, wenn der Balken auf und ab wippt. Die Kolbenpumpen 32, 32' können so Wasser aus einer Zuleitung 2 in eine Druckleitung 4 fördern.

Auch hier kann das Wasser an derselben Stelle über eine einzige Leitung sowohl für die Antriebsleitung 1 wie auch für die Zuleitung 2 gefasst werden. In Figur 6 ist eine getrennte Fassung dargestellt, so dass auch die Zuleitung 2 mit einem Sieb 21 versehen ist.

Bei Verwendung von diesen Einzelkolbenpumpen 32, 32' kann auch eine Befüllung der Behälter 74, 74' gemäss dem in den Figuren 1 bis 4 beschriebenen Ausführungsbeispiel erfolgen, d.h. durch eine Wasserleitung mit Ventil.

Ebenfalls in Figur 6 ist eine alternative Form der Behälter 74, 74' erkennbar. Die Behälter 74, 74' sind hier vorzugsweise oben offen ausgebildet, um ein schnelles und auch während der Bewegung des Behälters 74, 74' mögliches Befüllen zu erleichtern.

Des Weiteren ist in den Behältern 74, 74' anstelle der Verschlussklappe 76, 76' ein federbelastetes Auslassventil 79, 79' angeordnet. Der Ventilkörper, hier in Form eines Kegelstumpfes, verschliesst die Öffnung, ragt aber nach unten aus dieser hinaus. Liegt nun der Behälter 74, 74' auf dem Boden auf, so wird der Ventilkörper entgegen einer Federkraft in den Behälter 74, 74' hinein gedrückt und gibt die Auslassöffnung des Behälters 74, 74' frei. Diese Ausführungsform hat den Vorteil, dass keine Betätigungsschnüre eingesetzt werden müssen. Die Verschlusskappen 76, 76' hingegen haben den Vorteil, dass die Behälter 74, 74' nicht auf dem Boden aufliegen müssen, um entleert zu werden.

Das erfindungsgemässe System und der erfindungsgemässe Pumpenantrieb ermöglichen ein möglichst wartungsfreies Fördern von Wasser mit einfachsten Mitteln.

### BEZUGSZEICHENLISTE

- 1: Antriebsleitung
- 10: Partikelsieb
- 11: Verbindungsrohr
- 110: Mündung
- 111: Kopplungsende
- 12: erste Stütze
- 12': zweite Stütze
- 12": dritte Stütze

- 2: Zuleitung
- 20: erster Schliesser
- 21: Sieb

- 3: Pumpe
- 30: Kolben
- 31: Antriebsachse
- 32, 32': Einzelpumpe

- 4: Pumpleitung
- 40: zweiter Schliesser
- 41: Manometer

- 5: Reservoir

- 6: Nutzleitung

- 7: Wippe
- 70: Lagerbock
- 71: Flanschdeckel
- 72: Verbindungsflansch zur Antriebsleitung
- 73: Balken der Wippe
- 730: erster Arm
- 731: zweiter Arm
- 74, 74': Wasserauffangbehälter
- 740: Ausflussöffnung
- 75: Ventilkugel
- 76, 76': Verschlussklappe
- 760, 760': Kniehebel
- 761, 761': Schwenklager
- 77, 77': Betätigungsschnur
- 770, 770': Rückstellfeder
- 771, 771': Umlenkrolle
- 772: Schutzrohr
- 780: Lager
- 781: Schwenkachse
- 79, 79': Auslassventil

- 8: Übertragungseinheit

## Patentansprüche

1. System zum Fördern von Wasser, wobei das System eine Pumpe (3) zur Förderung des Wassers und einen Pumpenantrieb (7) zum Antrieb der Pumpe (3) aufweist, **dadurch gekennzeichnet, dass** der Pumpenantrieb eine wasserbetätigte Wippe (7) ist und dass die Wippe (7) mit einer Antriebsachse (31) der Pumpe (3) wirkverbunden ist, so dass eine Schwenkbewegung der Wippe (7) eine Antriebsbewegung der Antriebsachse (31) zur Folge hat.

2. System nach Anspruch 1, wobei die Antriebsachse (31) mit einer Schwenkachse (781) der Wippe (7) fest oder über ein Getriebe verbunden ist.

3. System nach Anspruch 2, wobei die Pumpe (3) eine Zweikolbenpumpe ist.

4. System nach Anspruch 1, wobei die Pumpe (3) mindestens eine Einkolbenpumpe (32, 32') umfasst, dessen Kolbenstange mit einem Arm (730, 731) der Wippe (7) verbunden ist.

5. System nach einem der Ansprüche 1 bis 4, wobei die Wippe (7) einen auf einer Basis schwenkbar gelagerten Balken (73) mit einem ersten freien Ende aufweist, wobei an diesem ersten freien Ende ein Wasserauffangbehälter (74, 74') angeordnet ist, wobei eine Wasserleitung (73, 11) zum automatischen Befüllen des Behälters (74, 74') vorhanden ist, wenn er sich in einer oberen Position des ersten freien Endes befindet und wobei ein Mittel zum Entleeren des Behälters (74, 74') vorhanden ist, wenn dieser sich in einer unteren Position des ersten freien Endes befindet.

6. System nach Anspruch 5, wobei der Balken (73) zwei freie Enden aufweist, wobei an beiden freien Enden je ein Wasserauffangbehälter (74, 74') angeordnet ist und wobei die zwei Wasserauffangbehälter (74, 74') abwechslungsweise automatisch mit Wasser befüllbar und abwechslungsweise automatisch wieder entleerbar sind.

7. System nach einem der Ansprüche 5 oder 6, wobei der Wasserauffangbehälter (74, 74') an seiner Unterseite eine Öffnung (740) aufweist, welche federbelastet nach der Entleerung wieder verschliessbar ist.

8. System nach einem der Ansprüche 5 bis 8, wobei der Balken (73) hohl ausgebildet und als die genannte Wasserleitung ausgestaltet ist.

9. System nach einem der Ansprüche 5 bis 8, wobei die Wasserleitung (73) einen Anschluss (72) zum Anschluss einer Antriebsleitung (1) aufweist, welche Wasser zur Wasserleitung der Wippe (7) zuführt, und wobei dieser Anschluss (72) in einer durch die Schwenkachse (781) verlaufenden Ebene angeordnet ist.

10. System nach Anspruch 9, wobei in der Wasserleitung (73) ein Ventil (75) angeordnet ist, welches eine fluidkommunizierende Verbindung zwischen einen ersten der Wasserauffangbehälter (74, 74') und der Antriebsleitung (1) zulässt und eine fluidkommunizierende Verbindung zwischen dem zweiten der Wasserauffangbehälter (74, 74') und der Antriebsleitung (1) unterbricht und alternierend die fluidkommunizierende Verbindung zwischen dem ersten Wasserauffangbehälter (74, 74') und der Antriebsleitung (1) zulässt und die fluidkommunizierende Verbindung zwischen dem zweiten Wasserauffangbehälter (74, 74') und der Antriebsleitung (1) unterbricht.

11. System nach Anspruch 10, wobei dieses Ventil eine Kugel (75) aufweist und wobei sich die Wasserleitung im Balken (73) von der Schwenkachse (781) zu den Wasserauffangbehältern (74, 74') hin an je einer Stelle verjüngt, so dass die Kugel (75) beim Wippen des Balkens (73) zwischen diesen zwei verjüngten Stellen hin und her rollt und abwechslungsweise diese verjüngten Stellen dichtend verschliesst.

12. Antrieb einer Pumpe und/oder eines zweiten mechanischen Antriebs, insbesondere für ein System gemäss einem der Ansprüche 1 bis 11, **dadurch gekennzeichnet, dass** der erfindungsgemässe Antrieb eine wasserbetätigte Wippe (7) ist und dass die Wippe (7) mit einer Antriebsachse der Pumpe bzw. des zweiten mechanischen Antriebs wirkverbindbar ist, so dass eine Schwenkbewegung der Wippe (7) eine Antriebsbewegung der Antriebsachse zur Folge hat.
